# EUROPEAN PATENT SPECIFICATION

(11) **EP 1 152 817 B1**
(45) Date of publication and mention of the grant of the patent: **08.01.2003**
(21) Application number: 00900767.5
(22) Date of filing: 19.01.2000
(51) Int. Cl.: B01D 63/02, B01D 65/00, A61M 1/18

(54) **FILTERS AND METHOD FOR PRODUCING FILTERS**
FILTER UND VERFAHREN ZUR HERSTELLUNG VON FILTERN
FILTRES ET PROCEDE DE PRODUCTION DE FILTRES

(30) Priority: 29.01.1999 SE 9900283
(43) Date of publication of application: 14.11.2001
(73) Proprietor: Gambro Dialysatoren GmbH & Co. KG, D-72373 Hechingen (DE)
(72) Inventor: DANNENMAIER, Jürgen, D-72336 Balingen (DE); RAABE, Herbert, D-72401 Haigerloch-Stetten (DE); PIRNER, Manfred, D-72379 Hechingen (DE)
(74) Representative: Bornegard, Annette
(86) International application number: IB0000070
(87) International publication number: WO00044478

(56) References cited:
- EP-A- 0 200 158
- WO-A-96/04068
- US-A- 4 038 190
- US-A- 4 054 527
- US-A- 4 341 005
- US-A- 4 343 668

## Description

The present invention concerns a method for producing filters with membranes of hollow fibres, for example for dialysis. It further relates to a filter with membranes of hollow fibres, in which the hollow fibres are arranged as a bundle essentially parallel to one another in a tubular filter housing.

### TECHNICAL BACKGROUND

Filters with membranes of hollow fibres are employed for the most diverse purposes in the field of dialysis. For example, such filters are utilised for haemodialysis, in which blood is passed through the inside of hollow fibres constructed with semi-permeable walls and dialysis fluid is caused to flow past the outside of the hollow fibres. During this, diverse convection and diffusion processes take place across the walls of the hollow fibres that result in a cleansing of the blood and removal of superfluous fluid. Furthermore, the electrolyte concentration in the blood is conditioned and buffers such as bicarbonate or acetate, for example, are added to the blood.

Filters of this kind are also utilised for so-called haemofiltration, in which a substitution fluid is added to the blood. The blood is fed through the hollow fibres, but no dialysis fluid flows past the outer surface of the hollow fibres. In this case, superfluous fluid, in particular water, is removed from the blood solely with the aid of a pressure difference across the membrane, i.e. the semi-permeable wall of the hollow fibres. The substitution fluid can be added to the blood either before the filter or after the filter.

The above-mentioned filters can also be used for producing the substitution fluid itself; they are then called ultrafilters. In this case, water is fed through the hollow fibres and, by means of a pressure difference across the membrane or semi-permeable walls, filtered through the same; the water is filtered sterile by the removal of bacteria and endotoxins as well as other contamination products.

Further utilisations of the above-mentioned filters are for example haemodiafiltration, a combination of haemodialysis and haemofiltration, and plasmapheresis, in which the aqueous blood plasma is filtered out of the blood and fed back into the blood after treatment. However such filters are also used for reverse osmosis.

Several processes are known for making filters with membranes. For example, a process is known from DE-C-28 24 898, in which several hollow fibre lengths are continuously combined to form a bundle. This bundle is then fed step-wise to a potting apparatus that pots a limited area of the fibre bundle with a potting compound so that a firm block is created that encloses the hollow fibres. In this way, by the step-wise advancing of the fibre bundle, firm areas or blocks are formed on the fibre length at predetermined distances. In the subsequent process, the fibre length is divided into individual bundles by severing each of the firm blocks through the middle. In this way individual bundles with firm end regions are created. These firm end regions are processed in a further step such that the fibre bundle enclosed in the firm region terminates with open ends. The thus formed fibre bundle is then put into a two-part housing. Subsequently, the two housing parts are brought together and firmly joined.

A disadvantage of this known process is inter alia the many process steps, which are expensive in terms of apparatus and cost. Furthermore, with this known process only bundles of one size for filters, or filter housings of one size, can be produced. To produce fibre bundles with different sizes for filters of different sizes the potting device must be replaced. This determines the size of the fibre bundle.

Furthermore, with this known process there is a high danger of contamination for the hollow fibres and the finished fibre bundle, as numerous processing steps are necessary and consequently much time passes before the hollow fibres or the fibre bundle is enclosed in the housing and sealed from the environment.

This is true for the filters manufactured with this process as well as for other filters, for which a fibre bundle is fabricated in several processing steps and subsequently combined with other parts to form a filter. Examples for such filters are disclosed in DE-A-28 44 941, DE-A-28 45 002 and DE-A-28 45 003. The filters disclosed therein are each composed of several frames holding fibre bundles. The individual frames with finished fibre bundles are set on top of one another and clamped together by means of clamps, which form the housing. By adding end portions that include connections for inlet and outlet, the filter is finally completed.

Another known process consists of the feeding of hollow fibres to a winding wheel and winding these in sleeve lower parts arranged on the outer circumference thereof by turning the wheel. As soon as the desired fibre bundle thickness or fibre bundle size has been reached, the winding wheel is stopped and the sleeve upper parts are placed on the sleeve lower parts and fixed there. Subsequently, the hollow fibres are cut between the sleeves, the sleeves are removed from the winding wheel and transferred to an apparatus for taking the finished fibre bundles out of the sleeves and placing them into tubular filter casings.

This known process also has the disadvantage of numerous processing steps, so that in addition to the high constructional expense and the attendant cost there also exists a high danger of contamination of the finished fibre bundle; as has been described in detail above.

From US 4 341 005 a process is known where hollow fibers are fed to a winding wheel and are wound in first housing portions of a filter placed on the periphery of the winding wheel. If the first housing portions are full or slightly overfull, a second housing portion is placed over each fiber filled first housing portion. The two housing portions are secured together, and the hollow fibers between the housings are then cut. The housings are removed from the winding wheel, and the hollow fibers at the ends of the housings are thereafter potted by centrifugal castings which also permits the potting compound to join with or to adhere to the housing walls as well as to the hollow fibers. Following this potting the ends of the hollow fibers are again cut in the area of the potting compound to reexpose the hollow corse and end caps are sealed onto the housings to complete the filter.

Even if with this known process the risk for contamination of the finished fiber bundle is reduced, this known process still has the disadvantage of numerous processing steps.

From US 4 343 668 a more complex process is known, where a potting compound is applied at spaced intervalls on the hollow fibers during rotation of the winding wheel. This requires a complex and complicated device leading to high constructional expenses and attendant costs.

From US 4 038 190 a process is known where hollow fibers are wound on a core, whereafter the core is placed in a housing.

This known process also has the disadvantage of numerous processing steps, so that in addition to the high constructional expenses and the attendant costs there is also a high risk for contamination of the finished fiber bundle as has been described in detail above.

### DESCRIPTION OF THE INVENTION

In view of this background it is thus the object of the present invention to provide a method for producing filters with membranes of hollow fibres, for example for dialysis, whereby biters of any desired size can inexpensively and easily be reliably manufactured without excessive outlay, and with which the danger of contamination of the fibre bundle during fabrication of the filter is reduced.

A further object of the present invention is to provide a filter with membranes of hollow fibres, in which the hollow fibres are arranged essentially parallel to one another as a bundle in a tubular filter housing and that can be easily, inexpensively and reliably fabricated without excessive outlay.

These objects are achieved by way of a method wherein hollow fibres are laid one after the other in a first housing portion to form a bundle, subsequently a second housing portion is placed on the first housing portion to form a filter housing, the housing portions arc joined in a sealed fashion, the hollow fibres are joined in a sealed fashion both to each other and to the filter housing at least at one end by means of a potting compound, and the potted fibre ends are cut so that the hollow fibres terminate with open ends, whereby the first housing portion and the second housing portion are adhered together by means of the potting compound when the hollow fibre ends are potted.

This obviates an additional processing step for providing a sealed joint between both housing portions, so that the method as a whole becomes simple and less expensive. Polyurethane can be used as a potting compound, for example. This is particularly favourable when polycarbonate or ABS (Acrylnitril-Butadiene-Styrol copolymer) is used as the material for the housing portions.

The advantageous method for adhering the two housing portions by means of the potting compound can also be reliably employed when the hollow fibres are to be connected in a sealed fashion to one another and to the housing portions or the filter housing only at one end. In this case, for example, the potting compound can be fed in a suitable manner to the contact surfaces of the housing portions and to the ends of the hollow fibres that arc to be potted.

According to a preferred further embodiment, the hollow fibre bundle ends are each covered with a terminating part that is connected to the filter housing in a sealed fashion.

With this method it is possible to manufacture filters of any desired size simply and reliably, while at the same time, the danger of contamination is significantly reduced according to the preferred embodiment. The hollow fibres are laid one after the other in the filter housing to form a bundle, and the filter housing is closed directly after completing the fibre bundle. The fibre bundle is thus exposed to the surrounding atmosphere for only a short time, so that the risk of contamination of the fibre bundle is reduced. Also the risk of contamination of individual hollow fibres during the formation of the fibre bundle is reduced, as they are laid directly in the filter housing, and is not required to pass through several processing stages before arriving in the filter housing.

Laying the hollow fibres one after another in the filter housing has the further advantage that filters of any desired size can be produced easily and without replacing tools. Depending on the filter size, and thus the required size of the fibre bundle, only the required number of hollow fibres need be placed in the corresponding filter housing and the latter subsequently closed. In this way, filters of any desired size, i.e. with any desired membrane surface, can be fabricated easily and with little outlay. In particular, it is no longer necessary to provide different tools for each of the different fibre bundle sizes.

The method according to the invention is further simplified when, in accordance with a particularly preferred embodiment, the hollow fibres arc fed continuously to a rotary winding wheel on the outer circumference of which first housing portions are arranged. The housing portions are arranged such that the hollow fibres can be laid in these first housing portions as the wheel rotates, while after placing the second housing portions on the first housing portions the hollow fibres arc severed between the filter housings.

In this way, the said filters can be produced in a particularly simple fashion. The hollow fibres are continually wound into the housing portions arranged on the outer circumference of the winding wheel until the desired fibre bundle thickness, and therefore the desired membrane surface is obtained. It is advantageous that several filters or fibre bundles can be made simultaneously in one process step, namely the winding of the hollow fibres on the winding wheel. The number of generated filters or fibre bundles depends inter alia on the diameter of the winding wheel. A winding wheel with a large diameter has a larger outer circumference on which more housing portions can be arranged one behind the other. Likewise, the width of the winding wheel determines the number of filters of fibre bundles that can be made in one processing stage. If the winding wheel is wide enough, two or more housing portions can be laid side by side, so that two or more rows of housing portions arranged one after another into which the hollow fibres can be wound are provided on the outer circumference. This all contributes to providing a simple and inexpensive method.

It is furthermore advantageous when, in accordance with another embodiment, the second housing portion is flexibly joined to the first housing portion so that it need only be swung onto the first housing portion. For example, the first and second housing portions could be flexibly joined by means of a film hinge. This simplifies and facilitates the manufacture of the filter housing itself, since the first and second housing portions can be formed together as one part.

A further improvement of the method is obtained when both housing portions are formed half-shell-shaped, and the second half-shell-shaped housing portion is placed on the first half shell-shaped housing portion to form a tubular filter housing, in accordance with a further preferred embodiment. This facilitates on the one hand the winding of the hollow fibres in the first housing portion, as the half-shell shape of the first housing portion causes the hollow fibres to be centred as they are wound. On the other hand, the fibre bundle with the hollow fibres arranged essentially in parallel is surrounded in a manner adapted to its contours by the finished tubular filter housing. Thus no superfluous space is present around the fibre bundle that could accommodate unnecessarily large amounts of dialysis fluid, for example. Furthermore, the fibre bundle is supported from the outside so that the individual hollow fibres are securely held in the bundle. Mechanical damage to the hollow fibres is consequently avoided.

The terminating parts covering the hollow fibre ends can be connected to the filter housing in any desired manner, provided that a sealed and reliable joint is obtained. However, it is advantageous when the terminating parts are glued or welded or are screwed on to the filter housing. In this way, a simple, secure and reliable connection between terminating parts and filter housing is obtained.

The object is achieved by way of an apparatus, wherein the tubular filter housing is composed of two half-shells, and wherein the two half-shells are adhered together by means of the potting compound.

In this way the filters can be made simply and inexpensively without excessive outlay, as the hollow fibres can be laid one after the other in a first half-shell. Depending on the desired filter size or fibre bundle size that determines the membrane surface, the required number of hollow fibres can be laid in the filter housing. The thus formed fibre bundle can then be covered directly by the second half-shell, that is placed on the first half-shell, so that. on the one hand, damage to the hollow fibres, or the fibre bundle, by external forces is avoided, and on the other hand, the risk of contamination is reduced.

In accordance with a preferred embodiment, it is advantageously provided that the tubular filter housing is composed of two flexibly connected half-shells, the two half-shells being especially preferably flexibly connected by means of a film hinge. In this way the manufacture of the filter housing per se is inter alia simplified, because the first and second half-shells are formed as one piece and can be fabricated together. After laying the hollow fibres in the first half-shell, the second half-shell need only be swung onto the first half-shell to form the tubular housing for the filter.

### DESCRIPTION OF THE DRAWINGS

Further features and advantages of the invention will be described in more detail with reference to preferred embodiments and the enclosed drawings. These show in
Fig. 1 a schematic side view of a winding wheel;
Fig. 2 a perspective view of an open filter housing;
Fig. 3 a plane view of an open filter housing with a partially shown fibre bundle;
Fig. 4 a sectional view through the filter housing of Fig. 3 along the line A-A;
Fig. 5 a perspective view of a filter housing connected in a sealed fashion by means of ultrasound welding, with terminating parts;
Fig. 6 a plan view of an open filter housing for connecting both housing portions in a sealed fashion by means of the potting compound; and
Fig. 7 a perspective view of a filter housing with terminating parts joined in a sealed manner by means of the potting compound.

### DESCRIPTION OF THE PREFERRED EMBODIMENTS

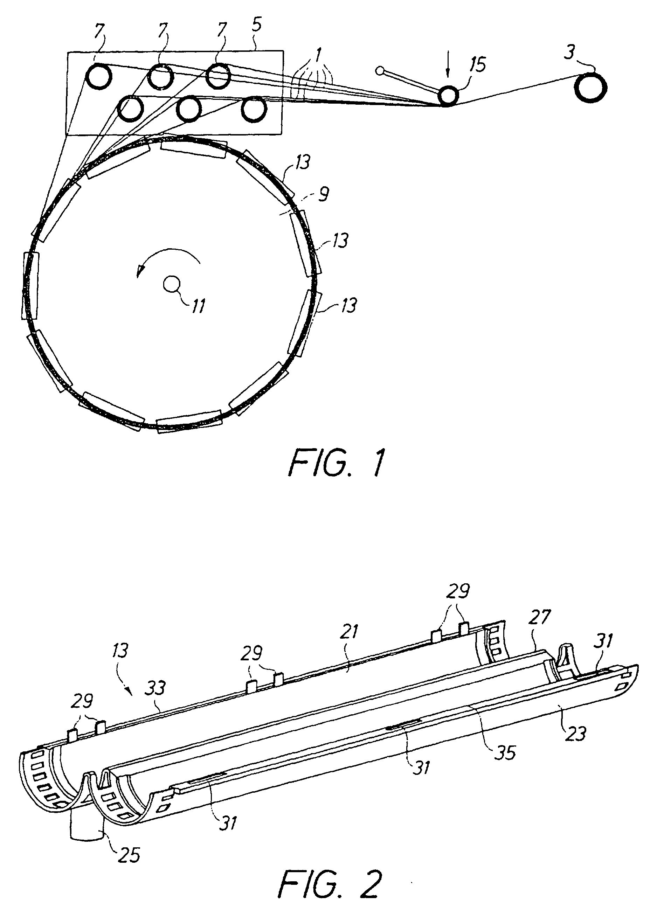

Fig. 1 shows a side view of a winding wheel 9. On the outer circumference of the winding wheel 9 several filter housings 13 are arranged in such a way that hollow fibres 1 can be wound in the filter housing 13. The hollow fibres 1 are fed from a supply roller 3 to a distributor apparatus 5, and from there further to the winding wheel 9. It is to be noted at this point that the hollow fibres could also be supplied to the distributor apparatus directly from a production machine, or spinning machine.

Several distributor rollers 7 are arranged on the distributor apparatus 5 and each feeds individual hollow fibres 1 to the filter housings 13 arranged on the winding wheel 9. The distributor rollers 7 are movable in their longitudinal axes and are controlled such that the individual hollow fibres 1 are placed in the filter housings 13 offset relative to one another and distributed across the whole housing width. The hollow fibres 1 are unwound from the supply roller 3 and wound on the winding wheel 9, or rather in the filter housings 13 arranged on the outer circumference of the winding wheel, as the winding wheel 9 is turned as indicated by the arrow 11. A tension roller 15 is disposed between the supply roller 3 and the distributor apparatus 5 and holds the hollow fibres 1 under a certain tension to enable the controlled deposit or winding of the hollow fibres 1 in the filter housings 13 on the winding wheel. The tension can be applied to the tension roller 15, or the hollow fibres 1, as indicated by the arrow at 15 using spring force or weight.

The individual distributor rollers 7 can also each feed two or more hollow fibres 1 to the filter housings 13 disposed on the winding wheel 9. In this case, the hollow fibres 1 supplied to the filter housings 13 by the different distributor rollers 7 are placed in the filter housings 13 displaced in groups relative to one another.

Fig. 2 shows a perspective view of an open filter housing 13. The filter housing 13 consists of a first half-shell-shaped housing portion 21 and a second half-shell-shaped housing portion 23, that are flexibly connected with one another by means of a film hinge 27. The first housing portion 21 comprises a connection 25 and a weld or adhesion strip 33 on the longitudinal side opposing the film hinge 27. The second housing portion 23 likewise comprises a weld or adhesion strip 35 on the longitudinal side opposing the film hinge 27. Several clamp stubs 29 are disposed on the weld or adhesion strip 33 of the first housing portion 21 and are constructed such that they can engage with correspondingly constructed apertures 31 on the weld or adhesion strip 35 of the second housing portion 23. To close the filter housing 13, the second housing portion 23 is pivoted onto the first housing portion 21 by means of the film hinge 27, so that the clamp stubs 29 latch into the apertures 31 and affix the first and second housing portions 21, 23 together, with the weld and adhesion strips 33 and 35 lying on top of one another. These are then joined in a sealed fashion by welding or gluing, as will be described later in more detail.

However, the sealed connection of the two housing portions 21 and 23 occurs only when the desired number of hollow fibres 1 has been laid in the first housing portion 21 and forms the desired bundle. To permit this, the filter housing 13 is disposed on the outer circumference of the winding wheel 9 (Fig. 1) in the open state shown in Fig. 2 in such a manner that at least the inside of the first housing portion 21 is directed outwardly. In this way, the hollow fibres 1 can be wound into the filter housing 13 as described with reference to Fig. 1.

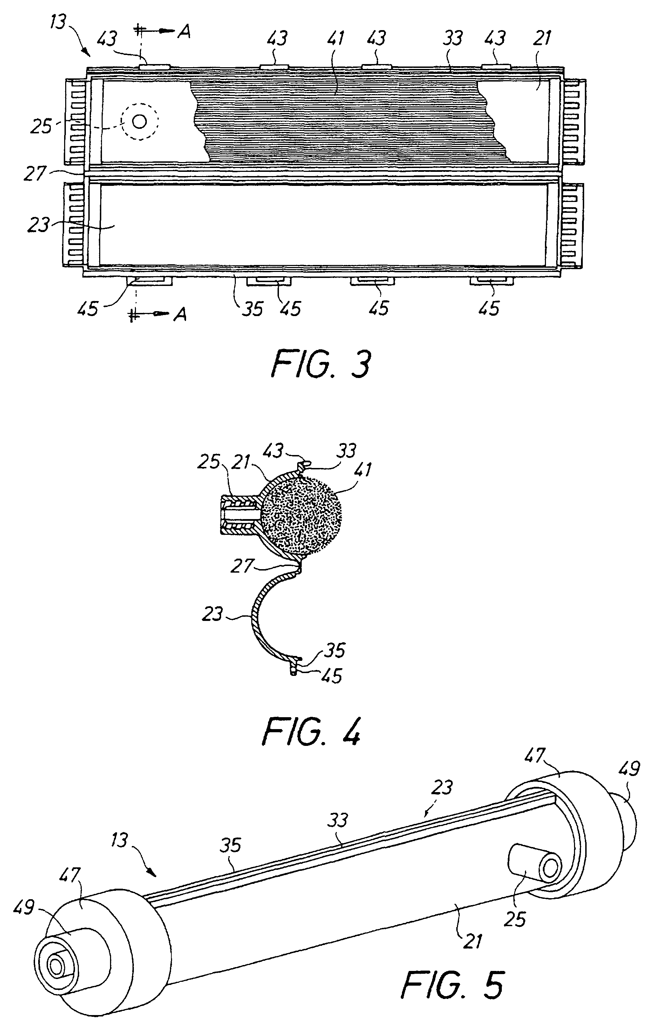

Fig. 3 shows a plan view of a filter housing 13, wherein a hollow fibre bundle 41 arranged in the first housing portion 21 is partially depicted. The filter housing 13 corresponds essentially to the filter housing 13 shown in Fig. 2 and described with reference to Fig. 2, so a renewed detail description can be dispensed with. In contrast to the filter housing 13 shown in Fig. 2, the clamp stubs 43 are not arranged on the weld or adhesion strip 33, but rather on the outer edge of the same. Also the apertures 45 are not arranged in the weld or adhesion strip 35 of the second housing portion 23, but likewise on the outer edge of the same.

It should be noted at this stage that the connector 25 arranged on the first housing portion 21 need not necessarily be disposed there. For example. the connector 25 could also be arranged on the terminating part that is described below in detail. Likewise, the connector 25 could be arranged on the second housing portion 23, or two or more connectors 25 could be provided, which may be arranged on the first or second housing portions 21, 23 or on the terminating parts still to be described, as desired.

As can be seen well in Fig. 3, the hollow fibre bundle 41 lies with hollow fibres 1 arranged essentially in parallel in the half-shell-shaped first housing portion 21 and fills the latter substantially completely. This can also be seen well from Fig. 4, which shows a section through the filter housing 13 along the line A-A in Fig. 3. The hollow fibre bundle 41 fills the cross section essentially fully, so that when the filter housing 13 is closed, that is, when the second housing portion 23 has been swung onto the first housing portion 21, it is supported mechanically by the filter housing 13. However it is not compressed by the filter housing 13; the hollow fibres are still separated from one another by a certain space or play.

Fig. 5 shows a perspective view of a filter housing 13 in the closed state with mounted terminating parts 47. The terminating parts 47 that are placed, respectively, on the ends of the tubular filter housing each comprise a further connector 49. As for the connectors 25, the connectors 49 can be of any desired structure and, for example, comprise a screw thread for connecting a conduit. The terminating parts 47 themselves can be placed on the filter housing in any desired manner, for example, they can be screwed on or be connected in a sealed fashion to the filter housing by welding or adhesion. In the embodiment illustrated here, the first housing portion 21 and the second housing portion 23 of the filter housing 13 shown here are connected together in a sealed manner by ultrasonic welding of the weld strip 33 on the first housing portion 21 to the weld strip 35 on the second housing portion 23.

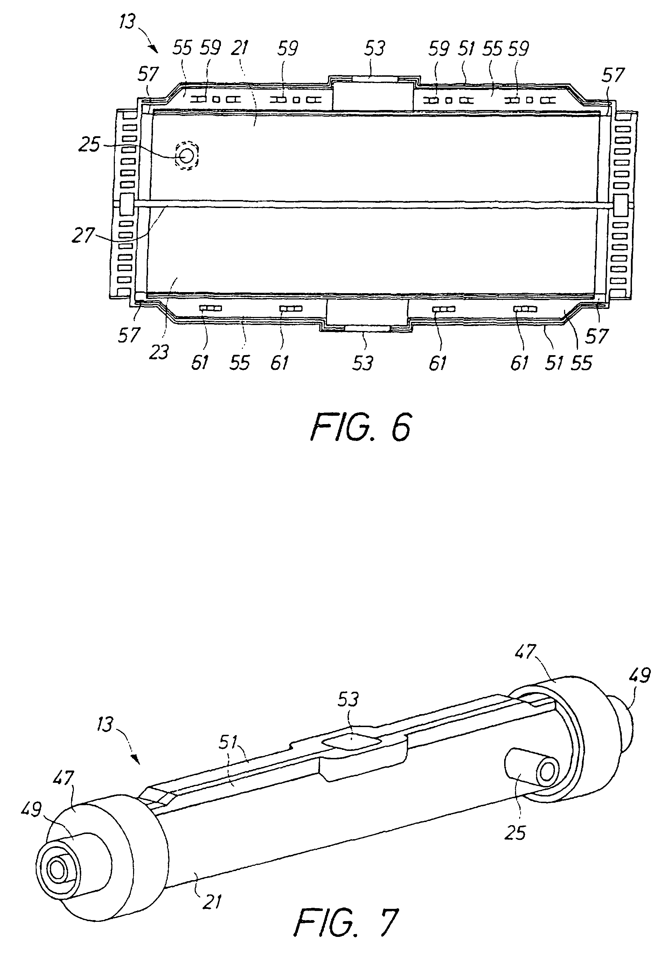

This is only one possibility for connecting the first and second housing portions 21, 23 in a sealed fashion. Another possibility that was mentioned above, is the gluing together of the first and second housing portions 21, 23 by means of the potting compound when potting the hollow fibres. A plan view of a correspondingly formed filter housing 13 is shown in Fig. 6.

To simplify the description, like parts are provided with like reference numerals. In contrast to the above described filter housings 13, the first and second housing portions 21, 23 each comprise a potting strip 51 on their longitudinal sides opposing the film hinge 27. In their central areas, the potting strips 51 each have a potting aperture 53 and, at their ends, an outlet aperture 57. A potting channel 55 extends from the potting aperture 53 on both sides towards the outlet apertures 57. Clamping means 59 are arranged in the potting strip 51 on the first housing portion 21 and are formed such that they engage with corresponding clamping means 61 arranged in the potting strip 51 of the second housing portion 23. These clamping means 59, 61 engage in one another and hold the filter housing 13 in a closed position when the second housing portion 23 is swung onto the first housing 21 by means of the film hinge 27.

In this closed state shown in Fig. 7, the potting strips 51 of the first and second housing portions 21,23 lie against one another so that the potting channel 55 is closed. If a potting compound, for example polyurethane, is now poured into the potting aperture 53, it will flow through the potting channel 55 towards the outlet apertures 57 and will exit there through these outlet apertures 57 into the interior of the filter housing 13, to pot the hollow fibre ends. The flow movement of the potting compound towards the outlet apertures 57 and thus the potting of the hollow fibre ends can, for example, be effectively assisted when the filter housing 13 is rotated to generate centrifugal forces acting in the direction of the ends of the filter housing 13.

After hardening, the potting compound remaining in the potting channel 55 sticks together the connected housing portions 21, 23 that are affixed by means of the clamping means 59 and 61 and seals the joint at the same time. A filter housing 13 made in this way is shown in perspective view in Fig. 7. Here again, like parts are provided with like reference numerals to simplify the description. Here the combined potting strips 51 with the potting aperture 53 in the centre are easily identifiable.

## Claims

1. Method for producing filters with membranes of hollow fibres, for example for dialysis, wherein
hollow fibres (1) are laid one after the other in a first housing portion (21) to form a bundle,
subsequently, a second housing portion (23) is placed on the first housing portion (21) to form a filter housing (13),
the two housing portions (21,23) are connected together in a sealed fashion,
at least at one end, the hollow fibres (1) are connected together and with the filter housing (13) in a sealed fashion by means of a potting compound,
and the potted hollow fibre ends are cut so that the hollow fibres (1) terminate with open ends,
**characterised in that** the first housing portion (21) and the second housing portion (23) are adhered together by means of the potting compound when the hollow fibre ends are potted.

2. Method according to claim 1, **characterised in that** the hollow fibre bundle ends are each covered with a terminating part (47), which is connected to the filter housing (13) in a sealed fashion.

3. Method according to claim 1 or 2, **characterised in that** hollow fibres (1) are continuously fed to a rotary winding wheel (9), on the outer circumference of which first housing portions (21) are arranged in such a manner that the hollow fibres (1) are laid one after the other in the first housing portions (21) as the winding wheel (9) is rotated,
and that after placing the second housing portion (23) on the first housing portion (21), the hollow fibres (1) are severed between the filter housings (13).

4. Method according to one of the previous claims, **characterised in that** the second housing portion (23) is flexibly connected to the first housing portion (21) and is swung over onto the first housing portion (21).

5. Method according to claim 4, **characterised in that** the second housing portion (23) is flexibly connected to the first housing portion (21) by means of a film hinge (27), and is swung over onto the first housing portion (21).

6. Method according to one of the previous claims, **characterised in that** the second housing portion (23) is half-shell-shaped and is placed on the first housing portion (21) which is also half-shell-shaped to form a tubular filter housing (13).

7. Method according to one of the previous claims, **characterised in that** the terminating parts (47) are glued or welded to the filter housing (13) or are screwed onto the filter housing (13).

8. Method according to one of the previous claims, **characterised in that** the first and second housing portions (21, 23) are fastened together by means of clamping means (43,45; 59, 61) arranged thereon before they are joined in a sealed fashion.

9. Filter with membranes of hollow fibres, for example for dialysis, wherein the hollow fibres are arranged as a bundle essentially parallel to one another in a tubular filter housing, and, at least at one end, arc connected together and with the tubular filter housing in a sealed fashion by means of a potting compound, the tubular filter housing (13) is composed of two half shells (21, 23) **characterised in that** the tubular filter housing (13) is provided with a potting aperture (53).

10. Filter according to claim 9, **characterised in that** the tubular filter housing (13) is composed of two flexibly connected half shells (21, 23).

11. Filter according to claim 10, **characterised in that** the tubular filter housing (13) is composed of two half shells (21, 23) that are flexibly connected by means of a film hinge (27).

12. Filter according to one of claims 9 to 11, **characterised in that** the half shells (21, 23) comprise clamping means (43, 45; 59, 61), whereby the half shells (21, 23) are connectable to one another.

## Patentansprüche

1. Verfahren zur Erzeugung von Filtern mit Membranen aus Hohifasern, beispielsweise für die Dialyse, bei dem
Hohlfasern (1) nacheinander in ein erstes Gehäuseteil (21) zur Bildung eines Bündels eingelegt werden,
anschließend ein zweites Gehäuseteil (23) auf das erste Gehäuseteil (21) zur Bildung eines Filtergehäuses (13) aufgesetzt wird,
die beiden Gehäuseteile (21, 23) dichtend miteinander verbunden werden,
die Hohlfasern (1) mindestens an einem Ende mittels einer Vergussmasse miteinander und mit dem Filtergehäuse (13) dichtend verbunden werden,
und die vergossenen Hohlfaserenden geschnitten werden, so dass die Hohlfasern (1) mit offenen Enden münden,
**dadurch gekennzeichnet,**
**dass** das erste Gehäuseteil (21) und das zweite Gehäuseteil (23) beim Vergießen der Hohlfaserenden mittels der Vergussmasse miteinander verklebt werden.

2. Verfahren nach Anspruch 1, **dadurch gekennzeichnet, dass** die Hohlfaserbündelenden jeweils mit einem Abschlussteil (47) überdeckt werden, welches dichtend mit dem Filtergehäuse (13) verbunden wird.

3. Verfahren nach Anspruch 1 oder 2, **dadurch gekennzeichnet, dass** Hohlfasern (1) kontinuierlich einem drehbaren Wickelrad (9) zugeführt werden, auf dessen Außenumfang erste Gehäuseteile (21) so angeordnet sind, dass die Hohlfasern (1) bei Drehung des Wickelrades (9) in die ersten Gehäuseteile (21) nacheinander eingelegt werden,
und dass nach dem Aufsetzen der zweiten Gehäuseteile (23) auf die ersten Gehäuseteile (21) die Hohlfasern (1) zwischen den Filtergehäusen (13) durchtrennt werden.

4. Verfahren nach einem der vorangehenden Ansprüche, **dadurch gekennzeichnet, dass** das zweite Gehäuseteil (23) mit dem ersten Gehäuseteil (21) gelenkig verbunden ist und auf das erste Gehäuseteil (21) aufgeschwenkt wird.

5. Verfahren nach Anspruch 4, **dadurch gekennzeichnet, dass** das zweite Gehäuseteil (23) mit dem ersten Gehäuseteil (21) mittels eines Filmscharniers (27) gelenkig verbunden ist und auf das erste Gehäuseteil (21) aufgeschwenkt wird.

6. Verfahren nach einem der vorangehenden Ansprüche, **dadurch gekennzeichnet, dass** das zweite Gehäuseteil (23) halbschalenförmig ausgebildet ist und auf das erste ebenfalls halbschalenförmig ausgebildete Gehäuseteil (21) zur Bildung eines rohrförmigen Filtergehäuses (13) aufgesetzt wird.

7. Verfahren nach einem der vorangehenden Ansprüche, **dadurch gekennzeichnet, dass** die Abschlussteile (47) mit dem Filtergehäuse (13) verklebt oder verschweißt werden oder auf das Filtergehäuse (13) aufgeschraubt werden.

8. Verfahren nach einem der vorangehenden Ansprüche, **dadurch gekennzeichnet, dass** das erste und zweite Gehäuseteil (21, 23) mittels an ihnen angeordneter Klemmmittel (43, 45; 59, 61) aneinander befestigt werden, bevor sie dichtend miteinander verbunden werden.

9. Filter mit Membranen aus Hohlfasern, beispielsweise für die Dialyse, bei dem die Hohlfasern als Bündel im Wesentlichen parallel zueinander in einem rohrförmigen Filtergehäuse angeordnet sind und an mindestens einem Ende mittels einer Vergussmasse miteinander und mit dem rohrförmigen Filtergehäuse dichtend verbunden sind, wobei das rohrförmige Filtergehäuse (13) aus zwei Halbschalen (21, 23) besteht, **dadurch gekennzeichnet, dass** das rohrförmige Filtergehäuse (13) mit einer Gießöffnung (53) versehen ist.

10. Filter nach Anspruch 9, **dadurch gekennzeichnet, dass** das rohrförmige Filtergehäuse (13) aus zwei gelenkig miteinander verbundenen Halbschalen (21, 23) zusammengesetzt ist.

11. Filter nach Anspruch 10, **dadurch gekennzeichnet, dass** das rohrförmige Filtergehäuse (13) aus zwei mittels eines Filmscharniers (27) gelenkig miteinander verbundenen Halbschalen (21, 23) zusammengesetzt ist.

12. Filter nach einem der Ansprüche 9 bis 11, **dadurch gekennzeichnet, dass** die Halbschalen (21, 23) Klemmmittel (43, 45; 59, 61) aufweisen, mittels denen die Halbschalen (21, 23) aneinander befestigbar sind.

## Revendications

1. Procédé de production de filtre à l'aide de membranes de fibres creuses, par exemple pour la dialyse, selon lequel
des fibres creuses (1) sont posées l'une après l'autre dans une première partie de boîtier (21) de façon à former un faisceau,
ensuite, une seconde partie de boîtier (23) est placée sur la première partie de boîtier (21) de façon à former un boîtier de filtre (13),
les deux parties de boîtier (21, 23) sont réunies ensemble d'une manière étanche,
à au moins une extrémité, les fibres creuses (1) sont réunies ensemble et avec le boîtier de filtre (13) d'une manière étanche au moyen d'un composé d'enrobage,
et les extrémités de fibres creuses enrobées sont sectionnées de façon que les fibres creuses (1) se terminent par des extrémités ouvertes,
**caractérisé en ce que** la première partie de boîtier (21) et la seconde partie de boîtier (23) sont réunies d'une manière adhérente au moyen du composé d'enrobage lorsque les extrémités de fibres creuses sont enrobées.

2. Procédé suivant la revendication 1, **caractérisé en ce que** les extrémités de faisceau de fibres creuses sont recouvertes chacune d'une partie terminale (47) qui est réunie au boîtier de filtre (13) d'une manière étanche.

3. Procédé suivant la revendication 1 ou 2, **caractérisé en ce que** des fibres creuses (1) sont acheminées d'une manière continue à une roue d'enroulement (9) rotative sur la périphérie circonférentielle extérieure de laquelle des premières parties de boîtier (21) sont disposées d'une manière telle que les fibres creuses (1) sont posées l'une après l'autre dans les premières parties de boîtier (21) au fur et à mesure qu'on fait tourner la roue d'enroulement (9),
et **en ce qu'**après avoir placé la seconde partie de boîtier (23) sur la première partie de boîtier (21), on sectionne les fibres creuses (1) entre les boîtiers de filtre (13).

4. Procédé suivant l'une des revendications précédentes, **caractérisé en ce que** la seconde partie de boîtier (23) est réunie d'une manière flexible à la première partie de boîtier (21) et est rabattue sur la première partie de boîtier (21).

5. Procédé suivant la revendication 4, **caractérisé en ce que** la seconde partie de boîtier (23) est réunie d'une manière flexible à la première partie de boîtier (21) au moyen d'une articulation en film. (27) et est rabattue sur la première partie de boîtier (21).

6. Procédé suivant l'une des revendications précédentes, **caractérisé en ce que** la seconde partie de boîtier (23) est en forme de demi-coquille et est placée sur la première partie de boîtier (21) qui est également en forme de demi-coquille de façon à former un boîtier de filtre (13) tubulaire.

7. Procédé suivant l'une des revendications précédentes, **caractérisé en ce que** les parties terminales (47) sont collées ou soudées au boîtier de filtre (13) ou sont vissées sur le boîtier de filtre (13).

8. Procédé suivant l'une des revendications précédentes, **caractérisé en ce que** les première et seconde parties de boîtier (21, 23) sont fixées ensemble à l'aide de moyens de serrage (43, 45 ; 59, 61) disposés sur celles-ci avant qu'elles soient réunies d'une manière étanche.

9. Filtre à membranes de fibres creuses, par exemple pour la dialyse, dans lequel les fibres creuses sont disposées sous forme d'un faisceau essentiellement parallèle entre elles dans un boîtier de filtre tubulaire et, à au moins une extrémité, sont réunies ensemble et au boîtier de filtre tubulaire d'une manière étanche au moyen d'un composé d'enrobage, le boîtier de filtre tubulaire (13) étant constitué de deux demi-coquilles (21, 23), **caractérisé en ce que** le boîtier de filtre (13) est pourvu d'une ouverture (53) d'introduction de produit d'enrobage.

10. Filtre suivant la revendication 9, **caractérisé en ce que** le boîtier de filtre tubulaire (13) est constitué de deux demi-coquilles (21, 23) réunies d'une manière flexible.

11. Filtre suivant la revendication 10, **caractérisé en ce que** le boîtier de filtre (13) tubulaire est constitué de deux demi-coquilles (21, 23) qui sont réunies d'une manière flexible au moyen d'une articulation en film (27).

12. Filtre suivant l'une des revendications 9 à 11, **caractérisé en ce que** les demi-coquilles (21, 23) comprennent des moyens de serrage (43, 45 ; 59, 61), de sorte que les demi-coquilles (21, 23) peuvent être réunies l'une à l'autre.
